# EUROPÄISCHE PATENTSCHRIFT

(11) **EP 2 687 554 B1**
(45) Veröffentlichungstag und Bekanntmachung des Hinweises auf die Patenterteilung: **24.10.2018**
(21) Anmeldenummer: 13169469.7
(22) Anmeldetag: 28.05.2013
(51) Int. Cl.: C08G 69/02, C08L 77/06, F02N 19/00, C08L 77/02

(54) **Polyamid-Formmasse, Herstellungsverfahren und danach hergestellte Formkörper aus der Polyamid-Formmasse, sowie deren Verwendung als Leitungen, die bei Motorfahrzeugen mit Abgasen in Kontakt kommen**
Polyamide molding material, production method and molded articles prepared from the polyamide molding material, and their use as conduits for such motor vehicles parts, which are in contact with the exhaust gases
Matière à mouler en polyamide, procédé de fabrication des articles moulés préparé à partir de la matière à mouler en polyamide, et leurs` utilisation comme conduites pour véhicules à moteur en contact avec les gaz d`échappement

(30) Priorität: 18.07.2012 CH 10932012
(43) Veröffentlichungstag der Anmeldung: 22.01.2014
(73) Patentinhaber: EMS-PATENT AG, 7013 Domat / Ems (CH)
(72) Erfinder: Hoffmann, Botho, 7013 Domat/Ems (CH); Kettl, Ralph, 7417 Paspels (CH); Scherrer, Luc, 7015 Tamins (CH)
(74) Vertreter: OK pat AG

(56) Entgegenhaltungen:
- EP-A1- 2 325 260
- EP-A1- 2 410 020
- "Lucalen A 2920 M", Lyondell Basell , 19. April 2012 (2012-04-19), XP002687845, Gefunden im Internet: URL:https://polymers.lyondellbasell.com/po rtal/binary/com.vignette.vps.basell.produc tgrade.ProductGradeFileDisplay?id=5d765cc1 db237010VgnVCM100000646f3c14RCRD&type=iso [gefunden am 2012-11-23]

## Beschreibung

Die Erfindung betrifft eine Polyamid-Formmasse, die blasformbar ist und eine erhöhte Resistenz gegen Säuren, insbesondere gegen Schwefelsäure und Essigsäure aufweist. Durch das Verfahren des Extrusionsblasformens lassen sich daraus Formkörper, insbesondere Rohre und Schläuche, herstellen, die aufgrund der genannten vorteilhaften Eigenschaften als Leitungen, insbesondere als Leitungen für Luftsysteme die bei Motorfahrzeugen mit Abgasen in Kontakt kommen, verwendet werden können.

Im Abgas eines Verbrennungsmotors finden sich nicht nur die theoretischen Verbrennungsprodukte CO₂ und H₂O, sondern unter anderem auch kleine Anteile von Säuren. Den Hauptanteil dieser Säuren machen Schwefelsäure oder je nach Zusammensetzung des Kraftstoffs auch Essigsäure aus. Essigsäure entsteht z.B. durch unvollständige Oxidation von Ethanol, der oft in einem gewissen Anteil in den heutigen Kraftstoffen enthalten ist. Der Ursprung der Schwefelsäure im Abgas sind schwefelhaltige Kraftstoffbestandteile (Mercaptane), aus welchen bei der Verbrennung im Motor die Schwefelsäure durch Oxidationsprozesse entsteht.

Das säurehaltige Abgas wird unter anderem zu einem Problem, wenn es mit einer Leitung aus einem Kunststoff in Kontakt kommt, der nicht säurebeständig ist. Durch die Einwirkung der Säuren setzt dann ein molekularer Abbau ein, wodurch die mechanischen Eigenschaften der Leitung bis zum Zerfall absinken können. Ein repräsentatives Dokument aus dem Stand der Technik in Bezug auf diese Problematik ist die Offenlegungsschrift DE 199 12 600 A1. In dieser Druckschrift wird als Kunststoff Polyoxymethylen (POM) beschrieben, das durch Zusatz von sterisch gehinderten Aminen und wahlweise weiteren Stabilisatoren säurestabil ausgerüstet wird. Auf Seite 8 von DE 199 12 600 A1 wird in den Zeilen 16 bis 17 auf Schwefelsäure hingewiesen, die sich im Motorraum oder Abgassystem durch Verbrennung von schwefelhaltigen Kraftstoffbestandteilen bilden kann.

Im Kraftfahrzeugbau werden oft Rohre aus Polyamid-Formmassen eingesetzt, weil Polyamide im Allgemeinen ein gutes Eigenschaftsprofil hinsichtlich mechanischer, thermischer und chemischer Beständigkeit aufweisen. So beschreibt beispielsweise die EP 2 325 260 A1 eine Polyamidformmasse zur Herstellung von verschiedenen Leitungssystemen im Automobilbereich. Für die Herstellung von Luftführungsteilen wird in der Regel das Extrusionsblasformen angewandt, das durch Varianten wie 3D-Blasformen oder Saugblasformen die Herstellung komplizierter Geometrien auf abfallarme und wirtschaftliche Art erlaubt. Die in der EP 2 325 260 A1 beschriebenen Formmassen sind auf Grund ihrer zu hohen Schmelzefestigkeit und vor allem wegen der schlechten Oberfläche des erhaltenen Bauteils nicht zum Extrusionblasformen geeignet. Nur Polyamid-Formmassen in einem bestimmten Schmelzefestigkeitsbereich kommen hierfür in Frage. Ist die Schmelzefestigkeit zu gering, neigt ein vertikal extrudierter Schmelzeschlauch aus Polyamid unter dem Eigengewicht in der Regel zu schnellem Auslängen und Abtropfen/Abreissen. Bei einer zu hohen Schmelzefestigkeit hingegen kommt es nicht zu Ausformung eines Schlauchs, vor allem werden schlechte Oberflächeneigenschaften beobachtet. In der EP 1 329 481 A2 wird eine blasformfähige Formmasse auf Basis von Polyetheramiden (einem Polyamid-Elastomer) beschrieben und durch eine Mindest-Viskosität charakterisiert.

Damit eine Polyamid-Formmasse zur Herstellung von Leitungen (d.h. Rohren oder Schläuchen) für Luftsysteme die mit Abgas in Kontakt kommen geeignet ist, muss sie zum Einen blasformbar sein, und zum Anderen eine hohe Säurebeständigkeit aufweisen. Solche Polyamid-Formmassen waren bisher nicht bekannt.

Es war deshalb die Aufgabe der vorliegenden Erfindung, eine Polyamid-Formmasse zur Verfügung zu stellen, die sowohl blasformbar als auch säurebeständig ist, und sich für die Herstellung von Formkörpern und deren Verwendung als Leitung, insbesondere als Leitung für Luftsysteme, die bei Motorfahrzeugen mit Abgasen in Kontakt kommen, eignet.

Diese Aufgabe wird gemäss der vorliegenden Erfindung mit einer Polyamid-Formmasse mit den Merkmalen von Anspruch 1 gelöst.

Die erfindungsgemässe Polyamid-Formmasse hat folgende Zusammensetzung:
(a) 45 - 97.9 Gew.-% eines Copolyamids, wobei dieses aufgebaut ist aus
   (a1) mindestens einem Diamin ausgewählt aus der Gruppe bestehend aus 1,6-Hexandiamin, Nonandiamin, und 1,10-Decandiamin, und
   (a2) Terephthalsäure, und
   (a3) mindestens einem weiteren polyamidbildenden Monomer ausgewählt aus der Gruppe: Dicarbonsäure mit 8 - 18 Kohlenstoffatomen, Lactam mit 6 bis 12 Kohlenstoffatomen, Aminosäure mit 6 bis 12 Kohlenstoffatomen, und Mischungen davon;
(b) 2 - 10 Gew.-% zumindest eines Schlagzähmodifikators;
(c) 0.1 - 10 Gew.-% zumindest eines Viskositätsmodifikators; und
(d) 0 - 35 Gew.-% Additive und/oder Zusatzstoffe;
wobei sich die Komponenten (a) bis (d) in der Summe auf 100 Gew.-% der Polyamid-Formmasse ergänzen.

Weitere bevorzugte Merkmale und Ausführungsformen der erfindungsgemässen Polyamid-Formmasse ergeben sich aus den abhängigen Ansprüchen. Zudem werden ein Herstellungsverfahren und Formkörper aus der Polyamid-Formmasse, sowie deren Verwendung als Leitungen für Luftsysteme die bei Motorfahrzeugen mit Abgasen in Kontakt kommen, beansprucht.

Anwendungsmöglichkeiten der vorliegenden Erfindung werden anhand einer schematischen Abbildung näher erläutert, welche den Umfang der vorliegenden Erfindung nicht einschränken soll. Dabei zeigt:

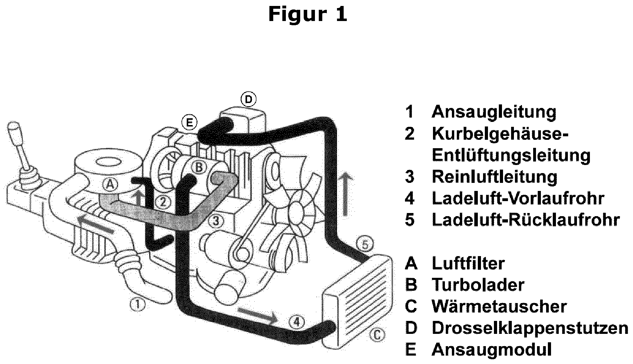

- Fig. 1: eine 3D-Ansicht eines Automobilmotors mit Turbolader und Luftführungsleitungen, die aus der erfinderischen Formmasse hergestellt werden können.

In einer bevorzugten Ausführungsform der Polyamid-Formmasse sind als Diamine (a1) 1,6-Hexandiamin und 1,10-Decandiamin gewählt, d.h. beide zugleich in Kombination. Ausgeschrieben hat eine solche Polyamid-Formmasse somit die Zusammensetzung:
(a) 45 - 97.9 Gew.-% eines Copolyamids, wobei dieses aufgebaut ist aus
   (a1) 1,6-Hexandiamin und 1,10-Decandiamin, und
   (a2) Terephthalsäure, und
   (a3) mindestens einem weiteren polyamidbildenden Monomer ausgewählt aus der Gruppe: Dicarbonsäure mit 8 - 18 Kohlenstoffatomen, Lactam mit 6 bis 12 Kohlenstoffatomen, Aminosäure mit 6 bis 12 Kohlenstoffatomen, und Mischungen davon;
(b) 2 - 10 Gew.-% zumindest eines Schlagzähmodifikators;
(c) 0.1 - 10 Gew.-% zumindest eines Viskositätsmodifikators; und
(d) 0 - 35 Gew.-% Additive und/oder Zusatzstoffe;
wobei sich die Komponenten (a) bis (d) in der Summe auf 100 Gew.-% der Polyamid-Formmasse ergänzen.

Eine besonders bevorzugte Ausführungsform der Polyamid Formmasse besteht aus:
(a) 69 - 90.9 Gew.-% eines Copolyamids, wobei dieses aufgebaut ist aus
   (a1) 1,6-Hexandiamin und 1,10-Decandiamin, und
   (a2) Terephthalsäure, und
   (a3) mindestens einem weiteren polyamidbildenden Monomer ausgewählt aus der Gruppe: Dicarbonsäure mit 8 - 18 Kohlenstoffatomen, Lactam mit 6 bis 12 Kohlenstoffatomen, Aminosäure mit 6 bis 12 Kohlenstoffatomen, und Mischungen davon;
(b) 7 - 10 Gew.-% zumindest eines Schlagzähmodifikators;
(c) 0.1 - 5 Gew.-% zumindest eines Viskositätsmodifikators; und
(d) 2 - 16 Gew.-% Additive und/oder Zusatzstoffe;
wobei sich die Komponenten (a) bis (d) in der Summe auf 100 Gew.-% der Polyamid-Formmasse ergänzen.

Ganz besonders bevorzugt sind Ausführungsformen der beiden vorangehend beschriebenen Rezepturen, bei denen das mindestens eine weitere polyamidbildende Monomer (a3) Dodecandisäure ist. Bei entsprechenden molaren Mengenverhältnissen der Monomeren erhält man so das bevorzugte Copolyamid PA 10T/612.

Das Copolyamid weist bevorzugt einen geringen Überschuss der Säureendgruppen auf, kann aber auch ausgeglichene Endgruppen oder einen leichten Überschuss der Aminoendgruppen aufweisen.

In einer weiteren bevorzugten Ausführungsform weist das Copolyamid eine relative Viskosität von kleiner als 2.5, bevorzugt kleiner als 2.0 und besonders bevorzugt von kleiner als 1.9, bestimmt nach ISO 307 wie unter Tabelle 1 angegeben, auf. Bevorzugt wird aber eine Mindest-Relativviskosität von 1.5 eingehalten.

Wird als Diamin (a1) Nonandiamin, worunter alle isomeren Diamine mit 9 Kohlenstoffatomen umfasst sind, verwendet, so sind Isomerenmischungen aus dem linearen Isomer n-1,9-Nonandiamin und seinem verzweigten Isomer 2-Methyl-1,8-Octandiamin besonders bevorzugt. In diesen Mischungen bildet n-1,9-Nonandiamin die Hauptkomponente.

Gemäss einer bevorzugten Ausführungsform der vorgeschlagenen Polyamid-Formmasse ist diese dadurch gekennzeichnet, dass innerhalb der Diamine von (a1) der Anteil von 1,6-Hexandiamin 10-40 mol-% und der Anteil von 1,10-Decandiamin 60-90 mol-% ausmacht und keine weiteren Diamine vorhanden sind, und dass innerhalb der Dicarbonsäuren von (a2) und (a3) der Anteil an Terephthalsäure 60-90 mol-% ausmacht, und der Anteil an weiterer Dicarbonsäure 10-40 mol-% ausmacht, wobei vorzugsweise innerhalb von (a1) der Anteil von 1,6-Hexandiamin 15 - 35 mol-% und der Anteil von 1,10-Decandiamin 65 - 85 mol-% ausmacht, und innerhalb der Dicarbonsäuren von (a2) und (a3) der Anteil an Terephthalsäure 65 - 85 mol-% ausmacht, und der Anteil an weiterer Dicarbonsäure 15 - 35 mol-%.

Eine etwas spezifischere Ausführungsform ist dadurch gekennzeichnet, dass neben 1,6-Hexandiamin und 1,10-Decandiamin keine weiteren Diamine innerhalb von (a1) vorhanden sind und der Anteil von 1,6-Hexandiamin 15 - 25 mol-% und der Anteil von 1,10-Decandiamin 65 - 75 mol-% ausmacht, und dass innerhalb der Dicarbonsäuren von (a2) und (a3) der Anteil an Terephthalsäure 65 - 75 mol-% ausmacht, und der Anteil an weiterer Säure 15 - 25 mol-% ausmacht, wobei vorzugsweise die weitere Säure ausgewählt ist als Dicarbonsäure mit 8 - 18 Kohlenstoffatomen, und daneben keine weiteren polyamidbildenden Monomere vorliegen.

Die als Komponente (a3) eingesetzten C₈-C₁₈ Dicarbonsäuren können aromatischer, aliphatischer und/oder cycloaliphatischer Natur sein. Geeignete aromatische Dicarbonsäuren sind beispielsweise Isophthalsäure (IPS), Korksäure (C8), Azelainsäure (C9), Sebazinsäure (C10), Undecandisäure (C11), Dodecandisäure (C12), Brassylsäure (C13), Tetradecandisäure (C14), Pentadecandisäure (C15), Hexadecandisäure (C16), Heptadecandisäure (C17), Octadecandisäure (C18), cis- und/oder trans-Cyclohexan-1,4-dicarbonsäure, cis- und/oder trans-Cyolohexan-1,3-dicarbonsäure (CHDA), und/oder Mischungen davon. Besonders bevorzugt ist dabei die Dicarbonsäure mit 8-18 Kohlenstoffatomen ausgewählt aus der Gruppe Isophthalsäure, Sebazinsäure (C10), Undecandisäure (C11) und Dodecandisäure (C12), wobei Letztere insbesondere bevorzugt ist.

Als Schlagzähmodifikator (b) ist ein Maleinsäureanhydrid-gepfropfter Blend aus Ethylen-Propylen-Copolymer und Ethylen-Butylen-Copolymer bevorzugt. Ein solcher Schlagzähmodifikator ist unter dem Handelsnamen Tafmer MC201 von der Firma Mitsui Chemical (JP) erhältlich.

Weitere bevorzugte Schlagzähmodifikatoren sind Ionomere. Ionomere besitzen kleine Mengen an ionischen Gruppen gebunden an eine unpolare Polymerkette. Zur Anwendung kommen erfindungsgemäss Ionomere, hergestellt aus den Monomeren α-Olefin, α,β-ungesättigte Carbonsäure und gegebenenfalls weiteren Comonomeren, wobei die Ionomere ganz oder teilweise durch Metallionen neutralisiert sind. Beispiele für das α-Olefin sind Ethen, Propen, Buten, Penten und Hexen, die allein oder in Kombination eingesetzt werden. Beispiele für die α,β-ungesättigte Carbonsäure sind Acrylsäure, Methacrylsäure, Ethacrylsäure, Itaconsäure, Maleinsäureanhydrid, Maleinsäuremonoethylester, und Maleinsäure. Die Carbonsäuren können allein oder in Kombination eingesetzt werden, bevorzugt werden die Carbonsäuren Acrylsäure und Methacrylsäure. Beispiele für die erfindungsgemässen Comonomere sind Acrylsäureester, Methacrylsäureester, Styrol, Norbornen-Derivate, etc. Handelsprodukte sind z.B. ACLYN (Honeywell) und Surlyn (DuPont).

In einer weiteren Ausführungsform werden Blockpolymere des SEBS-Typs (Styrol-Ethylen/1-Buten/Styrol) als Schlagzähmodifikatoren (SZM) verwendet. Bevorzugte SZM auf Basis von Styrolmonomeren (Styrol und Styrolderivate) und anderen vinylaromatischen Monomeren sind auch Blockcopolymere aufgebaut aus alkenylaromatischen Verbindungen und einem konjungierten Dien sowie hydrierte Blockcopolymere aus einer alkenylaromatischen Verbindung und konjungierten Dienen oder Kombinationen dieser SZM-Typen. Das Blockcopolymer enthält mindestens einen Block abgeleitet von einer alkenylaromatischen Verbindung und wenigstens einem Block abgeleitet von einem konjungierten Dien. Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls erfindungsgemäss einsetzbar. Auch verzweigte Blockcopolymere die man in bekannter Weise, z.B. durch Pfropfreaktionen von polymeren "Seitenästen" auf eine Polymer-Hauptkette erhält, können verwendet werden.

Weitere bevorzugte Schlagzähmodifikatoren sind Ethylen-Vinylacetat-Copolymere, welche in einer besonders bevorzugten Ausführungsform mit Maleinsäureanhydrid gepfropft sind. Eine weitere Gruppe von bevorzugten Schlagzähmodifikatoren bilden Copolymere auf Polyolefinbasis die Acryl- oder Methacrylsäure enthalten, insbesondere seien hier Schlagzähmodifikatoren, wie Acrylkautschuke, z.B. Ethylen-Glycidyl-Methacrylat, Ethylen-Acrylsäureester-Glycidyl-Methacrylat oder sogenannte MBS- bzw. Kern-Mantel-Schlagzähmodifikatoren, z.B. auf Basis Methacrylat-Butadien-Styrol genannt.

In einer bevorzugten Ausführungsform weisen die Schlagzähmodifikatoren gemäss der vorliegenden Erfindung einen Pfropfanteil von 0.3 bis 1.0 %, insbesondere bevorzugt von 0.4 bis 0.8 % und besonders bevorzugt von 0.5 bis 0.6 % auf.

Die Schlagzähmodifikatoren der vorliegenden Erfindung werden in 2 bis 10 Gewichtsprozent, bevorzugt in 4 bis 10 Gewichtsprozent, und besonders bevorzugt einerseits in 5 bis 6 Gewichtsprozent oder alternativ andererseits in 6 bis 9 Gewichtsprozent, bezogen auf 100 Gewichtsprozent der Polyamidformmasse, welche sich aus den oben beschriebenen Komponenten (a) bis (d) zusammensetzt, eingesetzt. Die Summe aller die Schlagzähigkeit der erfindungsgemässen Polyamidformmasse erhöhenden Modifikatoren ist bevorzugt nicht höher als maximal 10 Gewichtsprozent.

Die erfindungsgemässe Polyamid-Formmasse enthält einen Viskositätsmodifikator (c), welcher bei der thermoplastischen Verarbeitung zu einem Molekulargewichtsaufbau durch Kettenverlängerung von Polyamidmolekülen führt. Eine bevorzugte Variante eines Viskositätsmodifikators ist ein Polycarbonat in einem säureterminierten Polyamid. Ein solcher Viskositätsmodifikator ist beispielsweise unter der Bezeichnung Brüggolen® M 1251 von der Firma Brüggemann Chemical (Deutschland) im Handel erhältlich, wobei es sich um ein Masterbatch aus einem niedrigviskosen Polycarbonat in einem säureterminierten Polyamid 6 handelt. Eine andere bevorzugte Variante eines Viskositätsmodifikators ist ein acrylsäuremodifiziertes Polyethylen hoher Dichte, vorzugsweise mit einem Pfropfgrad im Bereich von 5 bis 6 %. Ein solcher Polymer-Modifikator wird beispielsweise von der Firma Chemtura unter dem Handelsnamen Polybond® 1009 vertrieben und weist einen Pfropfgrad von 6 % auf.

Weitere bevorzugte Viskositätsmodifikatoren sind aromatische Polycarbodiimide, welche z.B. von der Firma Rhein-Chemie (Deutschland) unter dem Namen Stabaxol® P vertrieben werden. Andere bevorzugte Viskositätsmodifikatoren sind acrylsäuremodifizierte lineare Polyethylene niedriger Dichte, wie z.B. das von der Firma OKA-Tec angebotene Okabest® 2400. Weitere bevorzugte Viskositätsmodifikatoren sind 1,1'-carbonyl-bis-caprolactamate, welche z.B. von der Firma DSM unter dem Namen Allinco® CBC vertrieben werden, sowie Bisoxazoline, wie z.B. 1,4-Phenylen-bis(2-oxazolin).

Die Viskositätsmodifikatoren der vorliegenden Erfindung werden in 0.1 bis 10 Gewichtsprozent, bevorzugt in 0.1 bis 5 Gewichtsprozent und besonders bevorzugt in 0.2 bis 4 Gewichtsprozent bezogen auf 100 Gewichtsprozent der Polyamidformmasse, welche sich aus den oben beschrieben Komponenten (a) bis (d) zusammensetzt, eingesetzt.

Von Polycarbonaten in einem säureterminierten Polyamid und acrylsäuremodifizierten Polyethylenen als Viskositätsmodifikatoren werden bevorzugt 1 bis 10 Gewichtsprozent, insbesondere bevorzugt 2 bis 8 Gewichtsprozent und besonders bevorzugt 2 bis 5 Gewichtsprozent bezogen auf 100 Gewichtsprozent der Polyamidformmasse, welche sich aus den oben beschrieben Komponenten (a) bis (d) zusammensetzt, eingesetzt.

Von 1,1'-carbonyl-bis-caprolactamaten und aromatischen Polycarbodiimiden als Viskositätsmodifikatoren werden bevorzugt 0.1 bis 4 Gewichtsprozent, insbesondere bevorzugt 0.1 bis 2 Gewichtsprozent und besonders bevorzugt 0.1 bis 0.5 Gewichtsprozent bezogen auf 100 Gewichtsprozent der Polyamidformmasse, welche sich aus den oben beschrieben Komponenten (a) bis (d) zusammensetzt, eingesetzt.

Die Viskositätsmodifikatoren gemäss der vorliegenden Erfindung führen bei der thermoplastischen Verarbeitung zu einem Molekulargewichtsaufbau durch Kettenverlängerung der Polyamidmoleküle und wirken grundlegend anders als Schlagzähmodifikatoren.

Optional enthält die erfindungsgemässe Polyamid-Formmasse Additive und/oder Zusatzstoffe (d), die bevorzugt ausgewählt sind aus einer Gruppe, die Stabilisatoren; Pigmente; Farbstoffe; Leitfähigkeitsadditive wie z.B. Russ, Graphit oder Kohlenstoffnanofibrillen; Flammschutzmittel, insbesondere halogenfreie Flammschutzmittel wie z.B. Phosphinsäuresalze; Glasfasern und Schichtsilikate (bevorzugt Montmorillonit) umfasst. Diese Additive werden in 0 bis 35 Gewichtsprozent, bevorzugt in 0.01 bis 20 Gewichtsprozent, insbesondere bevorzugt von 1 bis 10 Gewichtsprozent und besonders bevorzugt in 1 bis 8 Gewichtsprozent bezogen auf 100 Gewichtsprozent der Polyamidformmasse, welche sich aus den oben beschriebenen Komponenten (a) bis (d) zusammensetzt, verwendet.

Die erfindungsgemässe Polyamid-Formmasse ist vorteilhafterweise beständig gegen Säuren, bevorzugt gegen Schwefelsäure und Essigsäure. Der Begriff Polyamid-Formmasse steht dabei für die Zusammensetzung, welche neben dem entsprechenden Granulat auch daraus nach irgendeinem Verfahren hergestellte Formkörper beliebiger Geometrie, insbesondere auch daraus hergestellte Rohre und Schläuche umfasst. In einer bevorzugten Ausführungsform liegen die mechanischen Eigenschaften nach der unten beschrieben Lagerung in Säure nicht unter 50 % der Ausgangswerte.

Die erfindungsgemässe Polyamid-Formmasse ist blasformbar und weist bei der angewandten Verarbeitungstemperatur eine Schmelzefestigkeit auf, die bevorzugt im Bereich von 35 bis 55 Sekunden, insbesondere bevorzugt im Bereich von 36 bis 53 Sekunden und besonders bevorzugt im Bereich von 37 bis 52 Sekunden liegt. Formmassen mit einer Schmelzefestigkeit ausserhalb des genannten Bereichs weisen die bereits oben genannten Nachteile bezüglich der Blasformbarkeit auf. Die von der Anmelderin entwickelte Methode zur Messung der Schmelzefestigkeit, für welche die oben genannten bevorzugten Bereiche für die Schmelzefestigkeit gelten, wird weiter hinten beschrieben.

Das bevorzugte Verfahren zur Herstellung von Rohrteilen aus einer erfindungsgemässen Polyamid-Formmasse besteht darin, dass eine Polyamid-Formmasse der beschriebenen Zusammensetzung extrusionsblasgeformt wird.

Beim Verfahren des Extrusionsblasformens werden vorzugsweise die Varianten 3D-Blasformen oder Saugblasformen angewandt. Eine Beschreibung des Extrusionsblasformprozesses mit allen gängigen Varianten, angefangen beim konventionellen Blasformen über verschiedene 3D-Technologien bis zum sequentiellen Blasformen und dem Coextrusionsblasformen, findet sich zum Beispiel im Technischen Datenblatt "Verarbeitung von Grilamid und Grilon durch Extrusionsblasformen" der Firma EMS (EMS-GRIVORY) aus dem Februar 1998.

Formmassen die zum Blasformen geeignet sind, können auch über andere Verfahren wie z.B. Spritzgiessen, Extrusion und Coextrusion verarbeitet werden, bei denen die Schmelzefestigkeit nicht von Belang ist. Gleiches gilt auch für die erfindungsgemässen Formmassen.

Generell eignen sich die erfindungsgemässen Polyamid-Formmassen für alle Anwendungen, bei denen Blasformbarkeit und Säurebeständigkeit gefordert wird.

Die bevorzugte Verwendung der erfindungsgemässen Formmassen, daraus hergestellter Formkörper oder eines Verfahrens zur Herstellung von Formkörpern aus solchen Formmassen besteht in der Verwendung für Leitungen für Luftsysteme die bei Motorfahrzeugen in Kontakt mit Abgasen kommen. Insbesondere ist bei dieser Verwendung die Leitung für Luftsysteme bei einem Ottomotor oder Dieselmotor eingebaut, und dabei besonders bevorzugt bei Motoren mit Abgas-Turbolader.

In der beispielhaften Figur 1 ist ein Automobilmotor mit Luftführungssystem abgebildet. Aus erfindungsgemässen Polyamid-Formmassen können z.B. die Reinluftleitung (3), das Ladeluft-Vorlaufrohr (4) und/oder das Ladeluft-Rücklaufrohr (5) gebildet sein. In diese Rohre gelangen Motorabgase z.B. über die Kurbelgehäuse-Entlüftungsleitung (2) oder durch kleine Leckagen in der Wellenlagerung des Abgas-Turboladers. Eine hohe Säure- und Temperaturbelastung muss aber insbesondere das Ladeluft-Rücklaufrohr an derjenigen Stelle aushalten, wo im Falle einer Abgasrückführung (welche der Reduktion der Stickoxid-Bildung dient) der rückgeführte Abgas-Teilstrom eingeleitet und zugemischt wird. Die erfindungsgemässe Polyamid-Formmasse bzw. eine daraus hergestellte Leitung kommt aber auch in Betracht für die Kurbelwellenentlüftungsleitung oder eventuell sogar als Abgasrückführungsleitung im Bereich nach dem Abgasrückführungskühler.

Die Luftführungsleitungen sind normalerweise einschichtig ausgebildet. Sie könnten aber auch eine oder mehrere zusätzliche Schichten umfassen. Weitere Schichten können prinzipiell aus allen auf dem beanspruchten Copolyamid haftenden Polyamiden bestehen, wobei PA 612, PA 610, PA 12, PA 1010, PA 1012, PA 6, PA 66 und PA 46 bevorzugt sind. Die erfindungsgemässe Polyamid-Formmasse bildet dabei die innere Schicht, die im Kontakt mit Abgas steht.

Die vorliegende Erfindung wird anhand der nachfolgenden Beispiele, welche die Erfindung illustrieren, nicht aber den Erfindungsumfang einschränken sollen, näher dargestellt.

Die in der nachfolgenden Tabelle 1 aufgeführten Materialien wurden in den Beispielen und Vergleichsbeispielen eingesetzt.

Die Formmassen für die erfindungsgemässen Beispiele B1, B2 und B3, sowie für die Vergleichsbeispiele VB1 bis VB7 wurden dann auf einem Zweiwellenextruder der Fa. Werner und Pfleiderer Typ ZSK25 hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert.

Die mechanischen Eigenschaften und Beständigkeitsmessungen wurden an spritzgegossenen Standardprüfkörpern (Zugstäben) durchgeführt. Die Methoden sind nach der Tabelle 2 aufgeführt.

**Tabelle 1: eingesetzte Materialien**

| Stoff | Handelsname | Lieferant | rel. Viskosität^{a)} | H₂O-Gehalt [Gew.-%] |
|---|---|---|---|---|
| PA 66 | Radipol A45 | Radici | 2.7 | 0.3 |
| PA 6 (A) | Grilon F47 | EMS-CHEMIE AG | 4.0 | 0.05 |
| PA 6 (B) | Grilon F34 | EMS-CHEMIE AG | 3.0 | 0.04 |
| PA 10T/612 | XE 4201 | EMS-CHEMIE AG | 1.7 | 0.05 |
| Schlagzähmodifikator | Tafmer MC201 | Mitsui Chem. (JP) | - | 0.1 |
| Viskositätsmodifikator 1 | Polybond 1009 | Crompton | - | 0.2 |
| Viskositätsmodifikator 2 | Brüggolen M 1251 | Brüggemann | - | - |
| Schichtsilikat | Cloisite 20A | Rockwood Additives, Southern Clay Products (US) | - | <2.5 |
| Glasfasern | GF Vetrotex 995 EC10-4.5 | Saint-Gobain *Vetrotex* Deutschland GmbH | - | - |
| Masterbatch für Schwarzeinfärbung und Hitzestabilisierung^{b)} | - | BASF, Crompton (US), Brüggemann Chem., DSM Andeno, W. Blythe, Isliker (CH) | - | - |

| | | | | |
|---|---|---|---|---|
| a) bestimmt nach ISO 307 (0.5 g Polyamid in 100 ml m-Kresol), Berechnung der relativen Viskosität (RV) nach RV = t/t₀ in Anlehnung an Abschnitt 11 der Norm, b) Masterbatch wird bei EMS-CHEMIE AG hergestellt, und die Einzelkomponenten bei den angegebenen Lieferanten bezogen. | | | | |

**Tabelle 2: Zusammensetzung und mechanische Eigenschaften**

| **Zusammensetzung** | **VB1** | **VB2** | **B1** | **B2** | **B3** | **VB3** | **VB4** | **VB5** | **VB6** | **VB7** |
|---|---|---|---|---|---|---|---|---|---|---|
| PA 66 | 40.2 | - | - | - | - | - | - | - | - | - |
| PA 6 (A) | 40.2 | - | - | - | - | - | - | - | - | - |
| PA 6 (B) | - | 93.25 | - | - | - | - | - | - | - | - |
| PA 10.T/6.12 | - | - | 84.15 | 86.15 | 71.15 | 88.15 | 70.15 | 93.15 | 84.15 | 95.15 |
| Schlagzähmodifikator | 10.0 | 0.80 | 9.0 | 9.0 | 9.0 | 9.0 | 27 | - | 13 | - |
| Viskositätsmodifikator 1 | 4.0 | 4.0 | 4.0 | - | 2.0 | - | - | 4.0 | - | - |
| Viskositätsmodifikator 2 | - | - | - | 2.0 | - | - | - | - | - | 2.0 |
| Cloisite 20A | 4.0 | - | - | - | - | - | - | - | - | - |
| Glasfasern | - | - | - | - | 15.0 | - | - | - | - | - |
| Masterbatch für Schwarzeinfärbung und Hitzestabilisierung | 1.6 | 1.95 | 2.85 | 2.85 | 2.85 | 2.85 | 2.85 | 2.85 | 2.85 | 2.85 |

| **Mechanische Eigenschaften** | | | | | | | | | | |
|---|---|---|---|---|---|---|---|---|---|---|
| Zugmodul [MPa] | 2300 | 2700 | 1945 | 1950 | 5100 | 1900 | 1270 | 2220 | 1950 | 2440 |
| Reissfestigkeit [MPa] | 50 | 50 | 46 | 64 | 103 | 62 | 42 | 64 | 60 | 66 |
| Reissdehnung [%] | 46 | 50 | 13 | 12 | 2.5 | 14 | 17 | 4 | 13 | 7 |
| Schlagzähigkeit Charpy bei 23°C [kJ/m²] | o.B. | o.B. | 80 % = o.B., 20 % = 136 | o.B. | 25 | o.B. | o.B. | 20 % = o.B., 80 % = 62 | o.B. | o.B. |
| Schlagzähigkeit Charpy bei -30°C [kJ/m²] | o.B. | o.B. | 20 % = o.B., 80 % = 56 | o.B. | 27 | o.B. | o.B. | 50 | o.B. | o.B. |
| Kerbschlagzähigkeit Charpy [kJ/m²] bei 23°C | 15 | 10 | 48 | 17 | 5 | 51 | 83 | 5.9 | 49 | 8.2 |
| Kerbschlagzähigkeit Charpy [kJ/m²] bei -30°C | 8 | 8 | 13 | 13 | 4 | 14 | 50 | 6.8 | 14 | 7.6 |

| | | | | | | | | | | |
|---|---|---|---|---|---|---|---|---|---|---|
| o.B. bedeutet: ohne Bruch | | | | | | | | | | |

### Normen zur Bestimmung der mechanischen Daten

Die in den Tabellen 2 und 4 angegebenen mechanischen Daten wurden nach den folgenden Normen bestimmt.

### Zug-E-Modul:

ISO 527 mit einer Zuggeschwindigkeit von 1 mm/min
ISO-Zugstab, Norm: ISO/CD 3167, Typ A1, 170 x 20/10 x 4 mm, Temperatur 23 °C.

### Reissfestigkeit und Reissdehnung:

ISO 527 mit einer Zuggeschwindigkeit von 50 mm/min bei unverstärkten und 5 mm/min bei verstärkten Materialien
ISO-Zugstab, Norm: ISO/CD 3167, Typ A1, 170 x 20/10 x 4 mm, Temperatur 23 °C.

### Schlagzähigkeit nach Charpy:

ISO 179/*eU
ISO-Prüfstab, Norm: ISO/CD 3167, Typ B1, 80 x 10 x 4 mm
   * 1 = nicht instrumentiert bei -30°C, 2 = instrumentiert bei 23°C.

### Kerbschlagzähigkeit nach Charpy:

ISO 179/*eA
ISO-Prüfstab, Norm: ISO/CD 3167, Typ B1, 80 x 10 x 4 mm
   * 1 = nicht instrumentiert bei -30°C, 2 = instrumentiert bei 23°C.

### Vorschriften Säurelagerung

### Beständigkeit gegen wässrige Schwefelsäure (pH1):

Die Prüfkörper wurden in ein Bombenrohr (DN80/12-155657, Volumen = 1L) gegeben und mit verdünnter (verdünnt mit destilliertem Wasser) Schwefelsäure (pH1), befüllt, so dass die Prüfkörper komplett in die Lösung eintauchten. Anschliessend wurde das Bombenrohr fest verschlossen und in einem Ofen auf 100°C erhitzt, und bei dieser Temperatur gehalten. Nach den in Tabelle 4 angegebenen Zeiten wurden Prüfkörper entnommen und die mechanischen Daten gemäss den oben angegebenen Normen ermittelt.

### Beständigkeit gegen Schwefelsäuredämpfe:

In ein Bombenrohr (DN80/12-155657, Volumen = 1 L) wurden 200 mL verdünnte (verdünnt mit destilliertem Wasser) Schwefelsäure (pH1) gegeben. Oberhalb dieser Lösung wurde ein Gitter eingesetzt und die Prüfkörper auf dieses Gitter gestellt. Das Bombenrohr wurde fest verschlossen und in einem Ofen auf 100°C erhitzt, und bei dieser Temperatur gehalten, so dass die Prüfkörper mit den entstehenden Dämpfen in Kontakt kamen. Nach den in Tabelle 4 angegebenen Zeiten wurden Prüfkörper entnommen und die ebenfalls in dieser Tabelle angegebenen mechanischen Daten gemäss den oben angegebenen Normen ermittelt.

### Beständigkeit gegen wässrige Essigsäure (pH2):

Die Prüfkörper wurden in ein Bombenrohr (DN80/12-155657, Volumen = 1L) gegeben und mit verdünnter (verdünnt mit destilliertem Wasser) Essigsäure (pH2), befüllt, so dass die Prüfkörper komplett in die Lösung eintauchten. Anschliessend wurde das Bombenrohr fest verschlossen und in einem Ofen auf 100°C erhitzt, und bei dieser Temperatur gehalten. Nach den in Tabelle 4 angegebenen Zeiten wurden Prüfkörper entnommen und die mechanischen Daten gemäss den oben angegebenen Normen ermittelt.

### Beständigkeit gegen Essigsäuredämpfe:

In ein Bombenrohr (DN80/12-155657, Volumen = 1 L) wurden 200 mL verdünnte (verdünnt mit destilliertem Wasser) Essigsäure (pH2) gegeben. Oberhalb dieser Lösung wurde ein Gitter eingesetzt und die Prüfkörper auf dieses Gitter gestellt. Das Bombenrohr wurde fest verschlossen und in einem Ofen auf 100°C erhitzt, und bei dieser Temperatur gehalten, so dass die Prüfkörper mit den entstehenden Dämpfen in Kontakt kamen. Nach den in Tabelle 4 angegebenen Zeiten wurden Prüfkörper entnommen und die ebenfalls in dieser Tabelle angegebenen mechanischen Daten gemäss den oben angegebenen Normen ermittelt.

### Schmelzefestigkeit

Unter der Schmelzefestigkeit wird das "Standvermögen" des Vorformlings beim Extrusionsblasformen verstanden. Wie bereits oben erwähnt sind zum Extrusionsblasformen nur Formmassen geeignet, deren Schmelzefestigkeit in einem bestimmten Bereich, d.h. in einem geeigneten Verarbeitungsfenster, liegt. Die Anmelderin hat ein eigenes, praxisbezogenes Verfahren entwickelt, nach welchem beurteilt wird, ob die Schmelzefestigkeit im genannten Bereich liegt. Bei diesem Verfahren wird ein Schmelzeschlauch kontinuierlich über einen Winkelkopf extrudiert. Als Messgrösse wird die Zeit verwendet, die der Schlauch benötigt, um den Abstand von der Düse bis zum Boden zurückzulegen. Dieser Abstand beträgt bei der verwendeten Anordnung 112 cm. Bei der Messung der Schmelzefestigkeit wird mit einem konstanten Ausstoss von 100 Kubikzentimetern Formmassen-Schmelze pro Minute und einer an den Polymertyp angepassten Temperatur (siehe Werte in Tabelle 3) gefahren. Die Zeitmessung wird in dem Moment gestartet, wenn der aus einer ringförmigen Extrusionsdüse kontinuierlich austretende Schmelzeschlauch an der Extrusionsdüse mit einem Spachtel abgestochen wird. Man stoppt die Zeit, sobald der neu austretende und nach unten wandernde Schlauchabschnitt den Boden berührt. Ein Material, das das zunehmende Eigengewicht (durch die laufend extrudierte Schmelze) schlecht tragen kann, d.h. sich viskos zu dehnen beginnt, wird sich stärker längen und dadurch die Spitze des Schmelzeschlauchs den Boden früher berühren, d.h. die kürzere Messzeit entspricht einer geringeren Schmelzefestigkeit. Der praktische Vorteil dieser Methode zur Ermittlung der Blasformfähigkeit ist, dass sie nicht nur auf einer einzigen isoliert betrachteten Eigenschaft wie dem Molekulargewicht des Polyamids oder einer Viskosität beruht, sondern dass noch alle weiteren Einflussgrössen, die für das Verhalten des extrudierten Vorformling-Schmelzeschlauchs relevant sind, automatisch und auf integrale Weise in die gemessene Zeit einfliessen.

Die folgenden Tabellen 3 und 4 stellen eine Übersicht über die experimentellen Untersuchungen und Ergebnisse hinsichtlich Blasformbarkeit und Säurebeständigkeit dar.

**Tabelle 3: Übersicht der experimentellen Ergebnisse, Schmelzefestigkeit und Blasformbarkeit**

| **Zusammensetzung** | **VB1** | **VB2** | **B1** | **B2** | **B3** | **VB3** | **VB4** | **VB5** | **VB6** | **VB7** |
|---|---|---|---|---|---|---|---|---|---|---|
| Schmelzefestigkeit bei 260°C [s] | | 40 | | | | | | | | |
| Schmelzefestigkeit bei 280°C [s] | 37 | | | | | | | | | |
| Schmelzefestigkeit bei 300°C [s] | | | 52 | 37 | 39 | 17 | 62 | 32 | 22 | 30 |
| Blasformbarkeit | +^{a)} | +^{a)} | +^{a)} | +^{a)} | +^{a)} | n.v.^{b)} | n.v.^{b)} | n.v.^{b)} | n.v.^{b)} | n.v.^{b)} |
| Beständigkeit gegen Essigsäure | -^{c)} | -^{c)} | +^{d)} | +^{d)} | n.g.^{e)} | n.g.^{e)} | n.g.^{e)} | n.g.^{e)} | n.g.^{e)} | n.g.^{e)} |
| Beständigkeit gegen Schwefelsäure | -^{c)} | -^{c)} | +^{d)} | +^{d)} | n.g.^{e)} | n.g.^{e)} | n.g.^{e)} | n.g.^{e)} | n.g.^{e)} | n.g.^{e} |

| | | | | | | | | | | |
|---|---|---|---|---|---|---|---|---|---|---|
| a) verarbeitbar, b) nicht verarbeitbar, c) Einbruch der mechanischen Eigenschaften bei Lagerung in Säure (siehe Tabelle 4), d) mechanische Eigenschaften bleiben nach der Lagerung in Säure zu >50 % erhalten (siehe Tabelle 4), e) nicht gemessen. | | | | | | | | | | |

**Tabelle 4: Mechanische Eigenschaften nach Lagerung in Säure**

| **Zusammensetzung** | **VB1** | **VB2** | **B1** | **Zusammensetzung** | **VB1** | **VB2** | **B1** |
|---|---|---|---|---|---|---|---|
| **Ausgangswerte** | 2300 | 2890 | | **Ausgangswerte** | | 2890 | 1945 |
| Zugmodul [MPa] | | | 1945 | Zugmodul [MPa] | 2300 | | |
| Reissfestigkeit [MPa] | 50 | 55 | 46 | Reissfestigkeit [MPa] | 50 | 55 | 46 |
| Reissdehnung [%] | 46 | 110 | 13 | Reissdehnung [%] | 46 | 110 | 13 |
| **14 h, bei 100°C in Schwefelsäure (pH 1)** | | | | **14 h, bei 100°C in Essigsäure (pH 2)** | | | |
| Zugmodul [MPa] | - | 514 (18) | 1900 (98) | Zugmodul [MPa] | - | 463 (16) | 1374 (70) |
| Reissfestigkeit [MPa] | - | 44 (80) | 42 (91) | Reissfestigkeit [MPa] | - | 42 (76) | 38 (83) |
| Reissdehnung [%] | - | 163 (148) | 25 (192) | Reissdehnung [%] | - | 184 (167) | 44 (340) |
| **250 h bei 100°C in Schwefelsäure (pH 1)** | | | | **250 h bei 100°C in Essigsäure (pH 2)** | | | |
| Zugmodul [MPa] | 0 | 0 | 1925 (99) | Zugmodul [MPa] | 0 | 585 (20) | 990 (51) |
| Reissfestigkeit [MPa] | 0 | 0 | 39 (85) | Reissfestigkeit [MPa] | 0 | 30 (55) | 33 (72) |
| Reissdehnung [%] | 0 | 0 | 84 (646) | Reissdehnung [%] | 0 | 46 (42) | 9 (69) |
| **14 h bei 100°C in Schwefelsäuredampf (pH 1)** | | | | **14 h bei 100°C in Essigsäuredampf (pH 2)** | | | |
| Zugmodul [MPa] | - | - | 1960 (101) | Zugmodul [MPa] | - | - | 1742 (90) |
| Reissfestigkeit [MPa] | - | - | 44 (96) | Reissfestigkeit [MPa] | - | - | 42 (91) |
| Reissdehnung [%] | - | - | 22 (169) | Reissdehnung [%] | - | - | 27 (208) |
| **250 h bei 100°C in Schwefelsäuredampf (pH 1)** | | | | **250 h bei 100°C in Essigsäuredampf (pH 2)** | | | |
| Zugmodul [MPa] | 397 (17) | - | 1940 (100) | Zugmodul [MPa] | 0 | - | 980 (50) |
| Reissfestigkeit [MPa] | 31 (62) | - | 39 (85) | Reissfestigkeit [MPa] | 0 | - | 32 (70) |
| Reissdehnung [%] | 62 (135) | - | 85 (654) | Reissdehnung [%] | 0 | - | 30 (230) |

| | | | | | | | |
|---|---|---|---|---|---|---|---|
| - bedeutet: nicht bestimmt; 0 bedeutet: Teststab gebrochen bzw. gerissen; Werte in Klammern geben den Erhalt der mechanischen Eigenschaften bezogen auf die Ausgangswerte in Prozent an. | | | | | | | |

Das Vergleichsbeispiel VB4 entspricht übrigens einer repräsentativen Zusammensetzung aus der oben diskutierten EP 2 325 260 A1. Trotz an und für sich entsprechender Copolyamid-Zusammensetzung war aber das Material von VB4 nicht durch Blasformen verarbeitbar.

Die Zusammensetzungen gemäss VB1 und VB2 erwiesen sich zwar als blasformbar, zeigten aber nach der Säurelagerung einen starken Abfall der mechanischen Eigenschaften. Bemerkenswert ist dabei auch, dass die Vergleichsmaterialien aus VB1 und VB2 vor der Säurebehandlung höhere Werte für die mechanischen Eigenschaften als die erfindungsgemässen Materialien aufweisen, aber nach der Säurelagerung deutlich unter die Werte für das erfindungsgemässe Material aus B1 abfallen.

Die Versuche haben also gezeigt, dass nur die ausgewogene, erfinderische Zusammensetzung einer Polyamid-Formmasse mit allen drei obligatorischen Komponenten in den ausgewählten Mengenanteilen gemäss Anspruch 1 die Aufgabenstellung in beiden Aspekten, Blasformbarkeit und Säurebeständigkeit, zu erfüllen vermag. Die gute Säurebeständigkeit bei gleichzeitiger Blasformbarkeit war für den Fachmann nicht zu erwarten.

Damit kann mit dieser Erfindung eine vorteilhafte Polyamid-Formmasse zur Verfügung gestellt werden, welche sich wirtschaftlich durch Blasformen zu Formkörpern wie Rohren und Schläuchen verarbeiten lässt, und die das Problem löst, dass Leitungen, insbesondere Leitungen für Luftsysteme, die bei Motorfahrzeugen mit Abgasen in Kontakt kommen, aus den bisher bekannten Polyamid-Blasformmassen nach kurzer Zeit durch Säuredämpfe angegriffen wurden. Leitungen aus der vorliegenden, erfindungsgemässen Polyamid-Formmasse haben jedoch eine derart erhöhte Säureresistenz, dass die mechanischen Eigenschaften auch bei starker Säureeinwirkung nicht unter 50 % der Ausgangswerte abfallen und somit eine sichere Funktion gewährleistet ist.

## Patentansprüche

1. Polyamid-Formmasse mit folgender Zusammensetzung:
(a) 45 - 97.9 Gew.-% eines Copolyamids, wobei dieses aufgebaut ist aus
(a1) mindestens einem Diamin ausgewählt aus der Gruppe bestehend aus 1,6-Hexandiamin, Nonandiamin, und 1,10-Decandiamin, und
(a2) Terephthalsäure, und
(a3) mindestens einem weiteren polyamidbildenden Monomer ausgewählt aus der Gruppe: Dicarbonsäure mit 8 - 18 Kohlenstoffatomen, Lactam mit 6 bis 12 Kohlenstoffatomen, Aminosäure mit 6 bis 12 Kohlenstoffatomen, und Mischungen davon;
(b) 2 - 10 Gew.-% zumindest eines Schlagzähmodifikators;
(c) 0.1 - 10 Gew.-% zumindest eines Viskositätsmodifikators; und
(d) 0 - 35 Gew.-% Additive und/oder Zusatzstoffe;
wobei sich die Komponenten (a) bis (d) in der Summe auf 100 Gew.-% der Polyamid-Formmasse ergänzen.

2. Polyamid-Formmasse gemäss Anspruch 1, **dadurch gekennzeichnet, dass**
(a1) eine Kombination von 1,6-Hexandiamin und 1,10-Decandiamin ist.

3. Polyamidformmasse gemäss Anspruch 1 oder 2 mit folgender Zusammensetzung:
(a) 69 - 90.9 Gew.-% eines Copolyamids, wobei dieses aufgebaut ist aus
(a1) 1,6-Hexandiamin und 1,10-Decandiamin, und
(a2) Terephthalsäure, und
(a3) mindestens einem weiteren polyamidbildenden Monomer ausgewählt aus der Gruppe: Dicarbonsäure mit 8 - 18 Kohlenstoffatomen, Lactam mit 6 bis 12 Kohlenstoffatomen, Aminosäure mit 6 bis 12 Kohlenstoffatomen, und Mischungen davon;
(b) 7 - 10 Gew.-% zumindest eines Schlagzähmodifikators;
(c) 0.1 - 5 Gew.-% zumindest eines Viskositätsmodifikators; und
(d) 2 - 16 Gew.-% Additive und/oder Zusatzstoffe;
wobei sich die Komponenten (a) bis (d) in der Summe auf 100 Gew.-% der Polyamid-Formmasse ergänzen.

4. Polyamid-Formmasse gemäss Anspruch 2 oder 3, **dadurch gekennzeichnet, dass** das mindestens eine weitere polyamidbildende Monomer (a3) Dodecandisäure ist.

5. Polyamid-Formmasse gemäss einem der vorhergehenden Ansprüche, **dadurch gekennzeichnet, dass** der Schlagzähmodifikator (b) ein Maleinsäureanhydrid-gepfropfter Blend aus Ethylen-Propylen-Copolymer und Ethylen-Butylen-Copolymer, ein Ionomer, ein Blockpolymer des SEBS-Typs, Ethylen-Vinylacetat-Copolymere, oder ein Copolymer auf Polyolefinbasis das Acryl- oder Methacrylsäure enthält, ist.

6. Polyamid-Formmasse gemäss Anspruch 1, **dadurch gekennzeichnet, dass** der Schlagzähmodifikator (b) in 4 bis 10 Gewichtsprozent, bevorzugt einerseits in 5 bis 6 Gewichtsprozent oder alternativ andererseits in 6 bis 9 Gewichtsprozent, bezogen auf 100 Gewichtsprozent der Polyamidformmasse, welche sich aus den oben beschrieben Komponenten (a) bis (d) zusammensetzt, eingesetzt wird.

7. Polyamid-Formmasse gemäss einem der vorhergehenden Ansprüche, **dadurch gekennzeichnet, dass** der Viskositätsmodifikator (c) ausgewählt ist aus der Gruppe bestehend aus einem Polycarbonat in einem säureterminierten Polyamid, einem acrylsäuremodifizierten Polyethylen hoher Dichte, einem aromatischen Polycarbodiimid, einem acrylsäuremodifizierten linearen Polyethylen niedriger Dichte, 1,1'-carbonyl-bis-caprolactamat und 1,4-Phenylen-bis(2-oxazolin).

8. Polyamid-Formmasse gemäss Anspruch 7, **dadurch gekennzeichnet, dass** der Viskositätsmodifikator in 0.1 bis 5 Gewichtsprozent und bevorzugt in 0.1 bis 4 Gewichtsprozent bezogen auf 100 Gewichtsprozent der Polyamidformmasse, welche sich aus den oben beschrieben Komponenten (a) bis (d) zusammensetzt, eingesetzt wird.

9. Polyamid-Formmasse gemäss einem der vorhergehenden Ansprüche, **dadurch gekennzeichnet, dass** die Additive und/oder Zusatzstoffe (d) ausgewählt sind aus einer Gruppe, die Stabilisatoren; Pigmente; Farbstoffe; Leitfähigkeitsadditive wie Russ, Graphit und Kohlenstoffnanofibrillen; Flammschutzmittel wie Phosphinsäuresalze; Glasfasern und Schichtsilikate umfasst.

10. Polyamid-Formmasse gemäss einem der vorhergehenden Ansprüche, **dadurch gekennzeichnet, dass** sie beständig gegen Säure, insbesondere gegen Schwefelsäure und Essigsäure ist.

11. Polyamid-Formmasse gemäss einem der vorhergehenden Ansprüche, **dadurch gekennzeichnet, dass** sie blasformbar ist und bei der angewandten Verarbeitungstemperatur eine Schmelzefestigkeit im Bereich von 35 bis 55 Sekunden, bevorzugt im Bereich von 36 bis 53 Sekunden und besonders bevorzugt im Bereich von 37 bis 52 Sekunden aufweist.

12. Formkörper, insbesondere Rohre und Schläuche, hergestellt aus einer Polyamid-Formmasse gemäss einem der vorhergehenden Ansprüche.

13. Verfahren zur Herstellung von Formkörpern, insbesondere von Rohren und Schläuchen aus einer Polyamid-Formmasse, **dadurch gekennzeichnet, dass** eine Polyamid-Formmasse gemäss einem der Ansprüche 1 bis 11 extrusionsblasgeformt wird.

14. Verfahren gemäss Anspruch 13, **dadurch gekennzeichnet, dass** beim Extrusionsblasformen 3D-Blasformen oder Saugblasformen angewandt wird.

15. Verwendung einer Polyamid-Formmasse gemäss einem der Ansprüche 1 bis 11, eines Formkörpers gemäss Anspruch 12 oder eines Verfahrens zur Herstellung von Formkörpern gemäss Anspruch 13 oder 14 für Leitungen, insbesondere Leitungen für Luftsysteme, die bei Motorfahrzeugen mit Abgasen in Kontakt kommen.

16. Verwendung gemäss Anspruch 15, **dadurch gekennzeichnet, dass** eine Leitung für Luftsysteme die mit Abgasen in Kontakt steht bei einem Ottomotor oder Dieselmotor eingebaut ist.

## Claims

1. Polyamide molding material, having the following composition:
(a) 45-97.9% by weight of a copolyamide, wherein this is composed of
(a1) at least one diamine selected from the group consisting of 1,6-hexanediamine, nonanediamine, and 1,10-decanediamine, and
(a2) terephthalic acid, and
(a3) at least one further polyamide-forming monomer selected from the group: dicarboxylic acid having 8 to 18 carbon atoms, lactam having 6 to 12 carbon atoms, amino acid having 6 to 12 carbon atoms, and mixtures thereof;
(b) 2-10% by weight of at least one impact modifier;
(c) 0.1-10% by weight of at least one viscosity modifier; and
(d) 0-35% by weight of additives and/or admixture;
wherein the components (a) to (d) add up in total to 100% by weight of the polyamide molding material.

2. Polyamide molding material according to claim 1, **characterized in that** (a1) is a combination of 1,6-hexanediamine and 1,10-decanediamine.

3. Polyamide molding material according to claim 1 or 2, having the following composition:
(a) 69-90.9% by weight of a copolyamide, wherein this is composed of
(a1) 1,6-hexanediamine and 1,10-decanediamine, and
(a2) terephthalic acid, and
(a3) at least one further polyamide-forming monomer selected from the group: dicarboxylic acid having 8 to 18 carbon atoms, lactam having 6 to 12 carbon atoms, amino acid having 6 to 12 carbon atoms, and mixtures thereof;
(b) 7-10% by weight of at least one impact modifier;
(c) 0.1-5% by weight of at least one viscosity modifier; and
(d) 2-16% by weight of additives and/or admixture;
wherein the components (a) to (d) add up in total to 100% by weight of the polyamide molding material.

4. Polyamide molding material according to claim 2 or 3, **characterized in that** the at least one further polyamide-forming monomer (a3) is dodecanedioic acid.

5. Polyamide molding material according to one of the preceding claims, **characterized in that** the impact modifier (b) is a maleic acid anhydride-grafted blend of ethylene-propylene copolymer and ethylene-butylene copolymer, an ionomer, a block polymer of the SEBS type, ethylene-vinyl acetate copolymers, or a polyolefin-based copolymer containing acrylic or methacrylic acid.

6. Polyamide molding material according to claim 1, **characterized in that** the impact modifier (b) is used in 4 to 10% by weight, preferably on the one hand in 5 to 6% by weight or alternatively on the other hand in 6 to 9% by weight, based on 100% by weight of the polyamide molding material, which is composed of the above described components (a) to (d).

7. Polyamide molding material according to one of the preceding claims, **characterized in that** the viscosity modifier (c) is selected from the group consisting of a polycarbonate in an acid-terminated polyamide, an acrylic-acid-modified high-density polyethylene, an aromatic polycarbodiimide, an acrylic-acid-modified linear low-density polyethylene, 1,1'-carbonyl-bis-caprolactamate and 1,4-phenylene-bis(2-oxazoline).

8. Polyamide molding material according to claim 7, **characterized in that** the viscosity modifier is used in 0.1 to 5% by weight, and preferably in 0.1 to 4% by weight, based on 100% by weight of the polyamide molding material, which is composed of the above described components (a) to (d).

9. Polyamide molding material according to one of the preceding claims, **characterized in that** the additives and/or admixture (d) are selected from a group comprising stabilizers; pigments; dyes; conductivity additives such as carbon black, graphite and carbon nanofibrils; flame retardants such as phosphinic acid salts; glass fibers and phyllosilicates.

10. Polyamide molding material according to one of the preceding claims, **characterized in that** it is resistant to acid, in particular to sulfuric acid and acetic acid.

11. Polyamide molding material according to one of the preceding claims, **characterized in that** it is blow-moldable and has a melt strength at the applied processing temperature in the range of 35 to 55 seconds, preferably in the range of 36 to 53 seconds and particularly preferably in the range of 37 to 52 seconds.

12. Molded articles, in particular pipes and hoses, made of a polyamide molding material according to one of the preceding claims.

13. Method for the production of molded articles, in particular of pipes and hoses made of a polyamide molding material, **characterized in that** a polyamide molding material according to one of claims 1 to 11 is extrusion blow molded.

14. Method according to claim 13, **characterized in that** 3D blow molding or suction blow molding is applied in the extrusion blow molding.

15. Use of a polyamide molding material according to one of claims 1 to 11, a molded article according to claim 12 or a method for the production of molded articles according to claim 13 or 14 for conduits, in particular conduits for air systems, which come into contact with exhaust gases in motor vehicles.

16. Use according to claim 15, **characterized in that** a conduit for air systems which is in contact with exhaust gases is installed in a gasoline engine or diesel engine.

## Revendications

1. Matière à mouler en polyamide ayant la composition suivante :
(a) de 45 à 97,9 % en poids d'un copolyamide, ce copolyamide étant composé
(a1) d'au moins une diamine choisie parmi le groupe composé de 1,6-hexanediamine, nonanediamine et 1,10-décanediamine, et
(a2) d'acide téréphtalique, et
(a3) d'au moins un autre monomère formant un polyamide choisi parmi le groupe composé de : acide dicarboxylique avec 8 à 18 atomes de carbone, lactame avec 6 à 12 atomes de carbone, acide aminé avec 6 à 12 atomes de carbone, et des mélanges de ces derniers ;
b) de 2 à 10 % en poids d'au moins un modificateur de résilience ;
(c) de 0,1 à 10 % en poids d'au moins un modificateur de viscosité ; et
(d) de 0 à 35 % en poids d'additifs et/ou d'adjuvants ;
les composants (a) à (d) additionnés faisant 100 % en poids de la matière à mouler en polyamide.

2. Matière à mouler en polyamide selon la revendication 1, **caractérisée en ce que** (a1) est une combinaison de 1,6-hexanediamine et de 1,10-décanediamine.

3. Matière à mouler en polyamide selon la revendication 1 ou 2 ayant la composition suivante :
(a) de 69 à 90,9 % en poids d'un copolyamide, ce dernier étant composé de
(a1) 1,6-hexanediamine et 1,10-décanediamine, et
(a2) d'acide téréphtalique, et
(a3) d'au moins un autre monomère formant un polyamide choisi parmi le groupe composé de : acide dicarboxylique avec 8 à 18 atomes de carbone, lactame avec 6 à 12 atomes de carbone, acide aminé avec 6 à 12 atomes de carbone, et des mélanges de ces derniers ;
(b) de 7 à 10 % en poids d'au moins un modificateur de résilience ;
(c) de 0,1 à 5 % en poids d'au moins un modificateur de viscosité ; et
(d) de 2 à 16 % en poids d'additifs et/ou d'adjuvants ;
les composants (a) à (d) additionnés faisant 100 % en poids de la matière à mouler en polyamide.

4. Matière à mouler en polyamide selon la revendication 2 ou 3, **caractérisée en ce que** le au moins un autre monomère (a3) formant un polyamide est de l'acide dodécanedioïque.

5. Matière à mouler en polyamide selon l'une des revendications précédentes, **caractérisée en ce que** le modificateur de résilience (b) est un mélange greffé d'anhydride maléique du copolymère éthylène-propylène et du copolymère éthylène-butylène, un ionomère, un polymère séquencé de type SEBS, des copolymères éthylène-acétate de vinyle, ou un copolymère à base de polyoléfine qui contient de l'acide acrylique ou méthacrylique.

6. Matière à mouler en polyamide selon la revendication 1, **caractérisée en ce que** le modificateur de résilience (b) est utilisé de 4 à 10 pour cent en poids, de préférence d'un côté de 5 à 6 pour cent en poids ou en variante d'un autre côté de 6 à 9 pour cent en poids rapporté à 100 pour cent en poids de la matière à mouler en polyamide, laquelle étant composé des composants (a) à (d) décrits ci-dessus.

7. Matière à mouler en polyamide selon l'une des revendications précédentes, **caractérisée en ce que** le modificateur de viscosité (c) est choisi parmi le groupe composé d'un polycarbonate dans un polyamide à terminaison acide, d'un polyéthylène de haute densité modifié par acide acrylique, d'un polycarbodiimide aromatique, d'un polyéthylène linéaire de basse densité modifié par acide acrylique, de 1,1'-carbonyl-bis-caprolactamate et 1,4-phénylène-bis(2-oxazoline).

8. Matière à mouler en polyamide selon la revendication 7, **caractérisée en ce que** le modificateur de viscosité est utilisé de 0,1 à 5 pour cent en poids et de préférence de 0,1 à 4 pour cent en poids rapporté à 100 pour cent en poids de la matière à mouler en polyamide, laquelle étant composé des composants (a) à (d) décrits ci-dessus.

9. Matière à mouler en polyamide selon l'une des revendications précédentes, **caractérisée en ce que** les additifs et/ou les adjuvants (d) sont choisis parmi un groupe qui comprend des stabilisateurs ; des pigments ; des colorants, des additifs de conductivité comme la suie, le graphite et les nanofibrilles de carbone ; des agents ignifuges comme des sels d'acide phosphinique ; des fibres de verre et des silicates lamellaires.

10. Matière à mouler en polyamide selon l'une des revendications précédentes, **caractérisée en ce qu'**elle est résistante aux acides, en particulier à l'acide sulfurique et à l'acide acétique.

11. Matière à mouler en polyamide selon l'une des revendications précédentes, **caractérisée en ce qu'**elle est moulable par soufflage et présente à la température de traitement utilisée une résistance de la masse fondue allant de 35 à 55 secondes, de préférence de 36 à 53 secondes, et de façon particulièrement préférée de 37 à 52 secondes.

12. Corps moulés, en particulier tubes et tuyaux, fabriqué à partir d'une matière à mouler en polyamide selon l'une des revendications précédentes.

13. Procédé pour fabriquer des corps moulés, en particulier des tubes et des tuyaux, à partir d'une matière à mouler en polyamide, **caractérisé en ce qu'**il est formé par extrusion-soufflage une matière à mouler en polyamide selon l'une des revendications 1 à 11.

14. Procédé selon la revendication 13, **caractérisé en ce qu'**il est utilisé pour l'extrusion-soufflage des moules de soufflage 3D ou des moules d'aspiration-soufflage.

15. Utilisation d'une matière à mouler en polyamide selon l'une des revendications 1 à 11, d'un corps moulé selon la revendication 12 ou d'un procédé pour fabriquer des corps moulés selon la revendication 13 ou 14 pour des conduites, en particulier des conduites pour des systèmes d'air qui entrent en contact avec des gaz d'échappement sur des véhicules à moteur.

16. Utilisation selon la revendication 15, **caractérisée en ce qu'**il est monté une conduite pour systèmes d'air qui est en contact avec des gaz d'échappement sur un moteur à essence ou un moteur diesel.
